# EUROPÄISCHE PATENTSCHRIFT

(11) **EP 1 442 338 B1**
(45) Veröffentlichungstag und Bekanntmachung des Hinweises auf die Patenterteilung: **03.08.2011**
(21) Anmeldenummer: 02774522.3
(22) Anmeldetag: 17.08.2002
(51) Int. Cl.: G05B 19/418

(54) **FUNKMODUL FÜR FELDGERÄTE**
RADIO MODULE FOR FIELD DEVICES
MODULE RADIO POUR APPAREILS DE TERRAIN

(30) Priorität: 12.09.2001 EP 01121956
(43) Veröffentlichungstag der Anmeldung: 04.08.2004
(73) Patentinhaber: ENDRESS + HAUSER WETZER GmbH + Co. KG, 87484 Nesselwang (DE); Endress+Hauser (Deutschland) AG+Co. KG, 79576 Weil am Rhein (DE)
(72) Erfinder: WALDHAUSER, Dieter, 87435 Kempten (DE); SCHNEIDER, Wilhelm, 87629 Füssen (DE)
(74) Vertreter: Andres, Angelika Maria
(86) Internationale Anmeldenummer: PCT/EP2002/009214
(87) Internationale Veröffentlichungsnummer: WO 2003/023536

(56) Entgegenhaltungen:
- EP-A- 0 940 738
- GB-A- 2 357 663
- RENATO BONADIO ET AL: "For remote stations,fieldbus + PLC + radio = economical network" IN TECH- NETWORKING, [Online] - Februar 1999 (1999-02) Seiten 46-49, XP002199199 Gefunden im Internet: <URL:http://www.isa.org/journals/intech/fe ature/1,1162,127,00.html> [gefunden am 2002-05-16]

## Beschreibung

Die Erfindung betrifft eine Vorrichtung, bestehend aus einem Feldgerät und einem Funk modul. In der Automatisierungstechnik werden häufig Feldgeräte eingesetzt, die zur Erfassung und/oder Beeinflussung von Prozeßvariablen dienen. Beispiele für derartige Feldgeräte sind Füllstandsmessgeräte, Massedurchflußmesser, Druckmesser, Temperaturmesser etc., die die entsprechenden Prozeßvariablen Füllstand, Massedurchfluß, Druck bzw. Temperatur erfassen. Zur Beeinflussung von Prozeßvariablen dienen sogenannte Aktoren, die z.B. als Ventile den Durchfluß einer Flüssigkeit in einem Rohrleitungsabschnitt beeinflussen.

Die Feldgeräte sind in der Regel mit einer zentralen Steuereinheit verbunden, die den gesamten Prozeßablauf steuert. In der zentralen Steuereinheit werden die Meßwerte der verschiedenen Prozeßvariablen ausgewertet bzw. überwacht und die entsprechenden Aktoren zur Prozeßbeeinflussung entsprechend angesteuert. Die Datenübertragung zwischen Feldgerät und Steuereinheit erfolgt nach den bekannten internationalen Standards für Feldbusse, wie z. B. 4-20mA Stromschleife, HART®, Foundation Fieldbus, Profibus etc.

Da die Feldgeräte meist vor Ort in Betrieb genommen und eingestellt werden, ist eine im Feldgerät integrierte Bedieneinrichtung (Vorortbedienung) vorgesehen, die eine manuelle Eingabe von Daten, die für das einwandfreie Funktionieren des Feldgerätes notwendig sind, erlaubt. Bei diesen Daten kann es sich beispielsweise um Kalibrierdaten, Parametrierdaten oder sonstige individuelle Einstellungen handeln.

In der Regel umfaßt die Bedieneinrichtung neben einer manuellen Eingabemöglichkeit auch eine Anzeige, die z. B. die Dateneingabe durch eine entsprechende Menüführung (Mehrsegmantanzeige, Matrixanzeige) erleichtert. Zusätzlich erlaubt die Anzeige meist auch die Darstellung des aktuellen Meßwerts der Prozeßvariablen in graphischer oder digitaler Form.

Derartige Bedieneinrichtungen für Feldgeräte weisen verschiedene Nachteile auf.

Da die Tastatur und die Anzeige der Bedeineinrichtung vor den Prozeßbedingungen (Staub, Feuchte etc.) und auch vor mechanischer Einflussung geschützt werden müssen, sind zusätzliche Schutzklappen am Gehäuse des Feldgerätes sowie entsprechende Abdichtungen notwendig. Teilweise muß die Bedieneinrichtung auch gegenüber dem Innenraum des Feldgerätegehäuses abgedichtet sein. Diese Abdichtungen sind insbesondere bei explosionsgefährdeten Anwendungen (Ex-Bereich) sehr aufwendig.

Weiterhin muß die Bedieneinrichtung von einem Mikroprozessor entsprechend angesteuert werden, was einerseits Rechnerleistung und auch ggf. zusätzliche Energie kostet.

Teilweise muß die Bedieneinrichtung in bereits vorhandene Feldgerätegehäuse integriert werden. Da in den Gehäusen meist Platzmangel herrscht, ist dies nur mit erhöhtem Aufwand möglich.

Die einzelnen Teile der Bedieneinrichtung, Tastatur und Anzeige etc. erhöhen den Produktionsaufwand und sind zusätzlich kostenintensiv und fehleranfällig.

Bei einem Ausfall oder Fehlerfunktion der Bedieneinrichtung muß das Feldgerät vor Ort von einem Servicetechniker aufgesucht und repariert werden.

Die Bedieneinrichtung wird, über die Betriebszeit des Feldgeräts gesehen, nur äußerst selten benutzt, sie ist aber trotzdem in vielen Feldgeräten vorhanden.

Mit der Bedieneinrichtung kann jeweils nur das betreffende Feldgerät, in dem sie fest integriert ist, bedient werden.

Aus der eigenen deutschen Patentanmeldung, Az.: 100 32 774 vom 6.7.2000, ist eine Bedieneinrichtung bekannt, die per Funk mit einem Feldgerät kommuniziert. Nachteilig an dieser Lösung ist, daß das Feldgerät, das bedient werden soll, eine entsprechende Funkeinrichtung aufweisen muß, die fest im Feldgerät integriert ist.

Herkömmliche Feldgeräte müssten aufwendig umgebaut werden, um eine Funkbedienung zu ermöglichen. Teilweise ist dieser Umbau auch prinzipiell nicht möglich. In jedem Fall ist ein solcher Umbau aufwendig und lohnt sich bei älteren Feldgeräten sicher nicht mehr.

D1 zeigt eine Vorrichtung, die dazu dient, einen Zusätzlichen drahtlosen Zugang zu Feldgeräten in einen Prozessanlage, die über eine drahtgebundene Verbindung mit einer darstelle verbunden sind, zu ermöglichen.

Aufgabe der Erfindung ist es ein Funkmodul für Feldgerät anzugeben, das die oben genannten Nachteile nicht aufweist und das insbesondere eine einfache und kostengünstige Bedienung von Feldgeräten (hauptsächlich von bereits im Einsatz befindlichen Feldgeräten) per Funk ermöglicht.

Gelöst wird diese Aufgabe durch die Merkmale des Anspruchs 1 oder des Anspruchs 2.

Dadurch können Feldgeräte, die keine eigene Funkeinrichtung au weisen, einfach per Funk bedient werden.

Gemäß einer alternativen bevorzugten Ausgestaltung der Erfindung erfolgt die Verbindung mit dem Feldgerät über eine Feldbusleitung.

Gemäß einer weiteren bevorzugten Ausgestaltung der Erfindung arbeitet der feldbus nach dem HART® Standard.

Gemäß einer weiteren bevorzugten Ausgestaltung der Erfindung wird bei den Funksignalen das gleiche Protokoll wie bei den Feldbussignalen verwendet.

Gemäß einer weiteren bevorzugten Ausgestaltung der Erfindung erfolgt die Energieversorgung des Funkmoduls über die Feldbusleitung.

Gemäß einer weiteren bevorzugten Ausgestaltung der Erfindung ist das Funkmodul als selbständige Einheit ausgebildet.

Gemäß einer alternativen Ausgestaltung der Erfindung ist das Funkmodul mit dem Feldgerät über eine Klippverbindung verbunden.

Gemäß einer bevorzugten Ausgestaltung der Erfindung weist das Funkmodul mehrere Kommunikationsmodule für unterschiedliche Feldgeräte auf.

Wesentliche Idee der Erfindung ist es, eine einfache Bedienung von Feldgeräten per Funk zu ermöglichen, ohne daß das zu bedienende Feldgerät eine eigene Funkeinrichtung aufweisen muß.

Nachfolgend ist die Erfindung anhand eines in der Zeichnung dargestellten Ausführungsbeispiels näher erläutert. Es zeigen:
Fig. 1 schematische Darstellung eines Feldbus mit einem erfindungsgemäßen Funkmodul das über eine Feldbusleitung mit einem Feldgerät verbunden ist,
Fig. 2 schematische Darstellung eines Feldbus mit einem erfindungsgemäßen Funkmodul das direkt mit einem Feldgerät verbunden ist,
Fig. 3 Blockschaltbild eines Funkmoduls gemäß Fig. 1 bzw. gemäß Fig. 2.

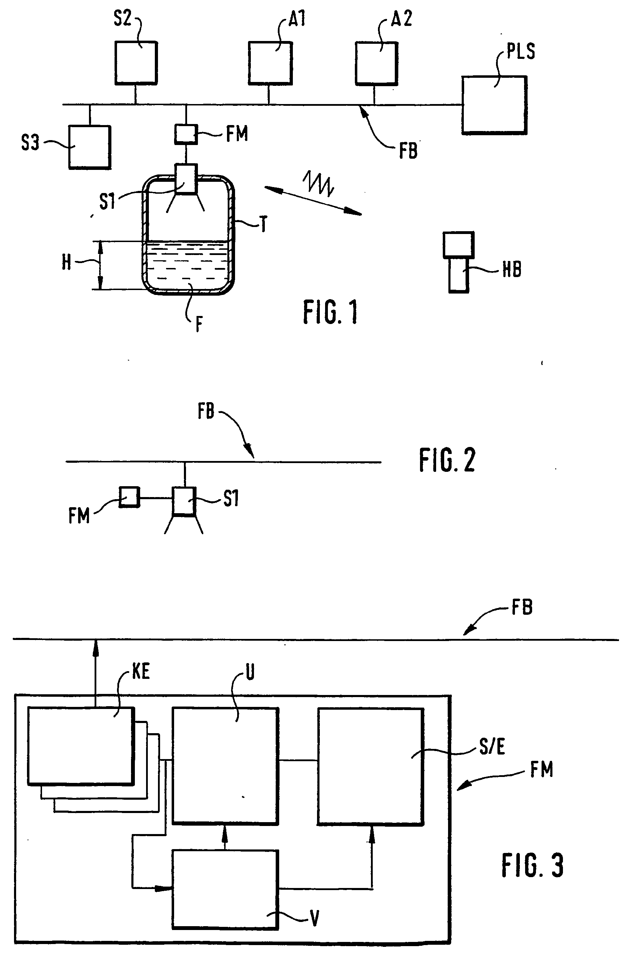

In Fig. 1 ist beispielhaft für ein Feldgerät ein Füllstandsmesser S1 dargestellt, der an einem Tank T angeordnet ist.

Der Füllstandsmesser S1 erfaßt die Füllhöhe H einer Flüssigkeit F im Tank T. Gemessen wird die Füllhöhe H im Tank T mittels eines Radarlaufzeitverfahrens. Dabei wird ein Radarpuls vom Füllstandsmesser S1 in Richtung der Oberfläche der Flüssigkeit F gesendet und der von der Oberfläche der Flüssigkeit reflektierte Puls registriert. Aus der Laufzeit des Radarpulses wird auf die Flüssigkeitshöhe H geschlossen.

Der Füllstandsmesser S1 ist mit einem Prozeßleitsystem PLS, das als zentrale Steuereinheit dient, über eine Feldbusleitung FB verbunden. Über die Feldbusleitung FB können der Füllstandsmesser S1 und das Prozeßleitsystem PLS mit einander kommunizieren. In der Regel werden die aktuellen Meßwerte des Füllstandsmessers S1 an das Prozeßleitsystem PLS gesendet und dort ausgewertet.

An die Feldbusleitung FB sind beispielhaft noch weitere Sensoren S2, S3 und Aktoren A1, A2 angeschlossen. Mit Hilfe dieser Sensoren S2, S3 werden weitere Prozeßvariable erfaßt bzw. mit Hilfe der Aktoren A1, A2 beeinflußt.

An die Feldbusleitung FB ist nach dem Füllstandsmesser S1 durch ein erfindungsgemäßes Funkmodul für Feldgeräte FM angeschlossen. Das Funkmodul für Feldgeräte FM läßt sich leicht in die Feldbusleitung FB integrieren, da diese in der Regel einfache Steckverbindungen aufweist, die leicht anzuschließen sind.

Zur Bedienung des Füllstandsmessers S1 dient ein Handbediengerät HB.

Als Bedieneinrichtungen sind tragbare Rechner (Laptops) oder Funktelefone (Handys) sowie tragbarer Kleinrechner (Palmtops) oder fest installierte Rechner denkbar.

In Fig. 2 ist eine alternative Ausgestaltung der Erfindung dargestellt bei der das Funkmodul FM direkt mit dem Feldgerät S1 verbunden ist.

Das Feldgerät S1 weist hierfür eine entsprechende Schnittstelle z.B. einen Seviceanschluss auf.

In Fig: 3 ist ein Blockschaltbild eines erfindungsgemäßen Funkmoduls für Feldgeräte dargestellt.

Das Funkmodul für Feldgeräte FM weist eine Kommunikationseinheit KE auf, die mit dem Feldgerät S1 verbunden ist.

Entsprechend den beiden alternativen Ausgestaltungen der Erfindung erfolgt die Verbindung entweder über die Feldbusleitung FB oder über eine entsprechende Schnittstelle am Feldgerät S1.

Das Funkmodul FM weist weiterhin eine Sende- und Empfangseinheit S/E, sowie eine Versorgungseinheit V und eine Umsetzereinheit U auf.

Die Kommunikationseinheit KE ermöglicht die Kommunikation zwischen Funkmodul FM und dem Feldgerät S1.

Die Sende-Empfangseinheit SE ermöglicht die Kommunikation mit dem Handbediengerät HB.

Die Umsetzereinheit U sorgt für die Umsetzung zwischen

Feldgerätekommunikation und Funkkommunikation.

Nachfolgend ist die Funktionsweise der Erfindung näher erläutert.

Das Funkmodul FM wird mit dem entsprechenden Feldgerät z.B. S1 verbunden. Wie bereits erwähnt kann die Verbindung über die Feldbusleitung FB oder direkt über eine entsprechende Kommunikationsschnittstelle am Feldgerät S1 erfolgen. Im ersten Fall wird eine entsprechende Steckverbindung der Feldbusleitung FB gelöst und das Funkmodul FM einfach zwischengeschaltet.

Im zweiten Fall wird das Funkmodul FM z.B. am Feldgerät festgeklippt.

Bei der Inbetriebnahme, Parametrierung oder Bedienung des Feldgerätes S1 werden die relevanten Daten per Funk zwischen Handbediengerät HB und Feldgerät S1 übertragen.

Die entsprechenden Daten können z.B. über die Tastatur des Handbediengeräts HB von Hand eingegeben werden.

Da zur Inbetriebnahme oder Parametrierung das betreffende Feldgerät S1 (oder andere Feldgeräte S2, S3, A1, A2) an der entsprechenden Prozeßkomponente (Tank, Rohrleitung) vom Servicepersonal aufgesucht werden muß, ist es ausreichend, wenn die Funkverbindung auf den Nahbereich (ca. 10m) um das Handbediengerät HB beschränkt ist.

Mit Hilfe der Funkübertragung ist deshalb die Inbetriebnahme und Parametrierung von Feldgeräten, die nicht oder nur schwer zugänglich sind, in einfacher Weise möglich.

Einzige Bedingung hierfür ist, daß die Reichweite der Funkverbindung ausreichend ist, um von einer leicht zugänglichen Stelle das Feldgerät S1 zu erreichen.

Der Feldbus kann z.B. nach dem Profibus Standard arbeiten.

In vorteilhafter Weise wird bei den Funksignalen das gleiche Protokoll wie bei den Feldgerätesignalen verwendet, so daß die Umsetzereinheit U sehr einfach aufgebaut sein kann.

Die Energieversorgung des Funkmoduls FM erfolgt in einfacher Weise über die Feldbusleitung FB durch die Versorgungseinheit V.

Die Energieversorgung des Funkmoduls kann auch z.B. über Batterie erfolgen.

Das Funkmodul FM ist als selbständige Einheit ausgebildet und kann so bei verschiedenen Feldgeräten S1, S2, S3, A1, A2 eingesetzt werden.

Zu betonen ist, daß das Funkmodul FM auch in explosiongefährdeten Bereichen eingesetzt werden kann.

Bei der direkten Verbindung zwischen Funkmodul FM und Feldgerät S1 ist z.B. eine Klippverbindung denkbar.

Gemäß einer bevorzugten Ausgestaltung der Erfindung weist das Funkmodul mehrere Kommunikationsmodule für unterschiedliche Feldgeräte auf.

## Patentansprüche

1. orrichtung , bestehend aus einem Funkmodul (FM) und einem Feldgerät (S1), wobei das Feldgerät zur Erfassung und/oder Beeinflussung von Prozessvariablen dient, und wobei das Feldgerät (S1) keine eigene Funkeinrichtung aufweist,
wobei das Feldgerät (S1) eine Feldbusschnittstelle aufweist, wobei das Funkmodul (FM) zwischen das Feldgerät (S1) und eine Feldbusleitung (FB) geschaltet ist, und
wobei das Funkmodul (FM) aus einer Sende-/Empfangseinheit (S/E) für Funksignale, einer Kommunikationseinheit (KE), die mit dem Feldgerät (S1) über die Feldbusschnittstelle verbunden ist, und einer zwischen geschalteten Umsetzereinheit (U), die die Funksignale in Feldgerätesignale bzw. die Feldgerätesignale in Funksignale umwandelt, besteht.

2. Vorrichtung, bestehend aus einem Funkmodul (FM) und einem Feldgerät (S1), wobei das Feldgerät zur Erfassung und/oder Beeinflussung von Prozessvariablen dient, und wobei das Feldgerät (S1) keine eignene Funkeinrichtung aufweist, wobei das Feldgerät (S1) eine Feldbusschnittstelle und einen Serviceanschluss aufweist, wobei das Feldgerät (S1) über den Serviceanschluss mit dem Funkmodul (FM) verbunden ist,
wobei das Funkmodul (FM) aus einer Sende-/Empfangseinheit (S/E) für Funksignale, einer Kommunikationseinheit (KE), die mit dem Feldgerät (S1) über den Serviceanschluss verbunden ist, und mit einer zwischen geschalteten Umsetzereinheit (U), die die Funksignale in Feldgerätesignale bzw. die Feldgerätesignale in Funksignale umwandelt, besteht.

3. Vorrichtung nach Anspruch 1, **dadurch gekennzeichnet, daß** die Kommunikationseinheit KE über eine Feldbusleitung (FB)mit dem Feldgerät (S1, S2, S3, A1, A2) verbindbar ist.

4. Vorrichtung nach einem der vorhergehenden Ansprüche, **dadurch gekennzeichnet, daß** die Datenübertragung auf der Feldbusleitung (FB) nach dem HART®-Standard arbeitet.

5. Vorrichtung nach einem der vorhergehenden Ansprüche, **dadurch gekennzeichnet, daß** die Funksignale der Sende- und Empfangseinrichtung (S/E) und die Feldbussignale der Kommunikationseinheit (KE) nach dem gleichen Protokoll erfolgen.

6. Vorrichtung nach einem der vorhergehenden Ansprüche, **dadurch gekennzeichnet, daß** die Energieversorgung des Funkmoduls (FM) über die Feldbusleitung (FB) erfolgt.

7. Vorrichtung nach einem der vorhergehenden Ansprüche, **dadurch gekennzeichnet, daß** das Funkmodul (FM) und das Feldgerät (S1, S2, S3, A1, A2) über eine lösbare Klippverbindung verbunden sind.

8. Vorrichtung nach einem der vorhergehenden Ansprüche, **dadurch gekennzeichnet, daß** das Funkmodul (FM) mehrere Kommunikationsmodule (KE1, KE2) für unterschiedliche Feldgeräte (S1, S2) aufweist.

9. Vorrichtung nach einem der vorhergehenden Ansprüche, wobei die Energieversorgung des Funkmoduls (FM) über eine Batterie erfolgt.

## Claims

1. Unit comprising a radio module (FM) and a field device (S1), where the field device is used to record and/or influence process variables and where the field device (S1) does not have its own proprietary radio unit, where the field device (S1) has a field device interface, where the radio module (FM) is switched between the field device (S1) and a fieldbus cable, and where the radio module (FM) comprises a transmitter/receiver unit (S/E) for radio signals, a communication unit (KE) which is connected to the field device (S1) via the field device interface, and an interconnected transducer unit (U) which converts the radio signals to field device signals or the field device signals to radio signals.

2. Unit comprising a radio module (FM) and a field device (S1), where the field device is used to record and/or influence process variables and where the field device (S1) does not have its own proprietary radio unit, where the field device (S1) has a field interface and a service terminal, where the field device (S1) is connected to the radio module (FM) via the service terminal, where the radio module (FM) comprises a transmitter/receiver unit (S/E) for radio signals, a communication unit (KE) which is connected to the field device (S1) via the service terminal, and an interconnected transducer unit (U) which converts the radio signals to field device signals or the field device signals to radio signals.

3. Unit as per Claim 1, **characterized in that** the communication unit (KE) can be connected to the field device (S1, S2, S3, A1, A2) via a fieldbus cable (FB).

4. Unit as per one of the previous claims, **characterized in that** data transmission on the field bus cable (FB) takes place on the basis of the HART® standard.

5. Unit as per one of the previous claims, **characterized in that** the radio signals of the transmitter and receiver unit (S/E) and the fieldbus signals of the communication unit (KE) use the same protocol.

6. Unit as per one of the previous claims, **characterized in that** power is supplied to the radio module (FM) via the fieldbus cable (FB).

7. Unit as per one of the previous claims, **characterized in that** the radio module (FM) and the field device (S1, S2, S3, A1, A2) are connected via a non-permanent clip connection.

8. Unit as per one of the previous claims, **characterized in that** the radio module (FM) has several communication modules (KE1, KE2) for different field devices (S1, S2).

9. Unit as per one of the previous claims, where power is supplied to the radio module (FM) via a battery.

## Revendications

1. Dispositif constitué d'un modèle radio (FM) et d'un appareil de terrain (S1), l'appareil de terrain servant à l'acquisition et/ou à l'influence de variables-process et l'appareil de terrain (S1) ne présentant aucun équipement radio propre, l'appareil de terrain (S1) comportant une interface de bus de terrain, le module radio (FM) étant intercalé entre l'appareil de terrain (S1) et une ligne de bus de terrain (FB), et
le module radio (FM) étant constitué d'une unité d'émission / de réception (S/E) pour les signaux radio, d'une unité de communication (KE), laquelle est reliée avec l'appareil de terrain (S1) par l'intermédiaire de l'interface de bus de terrain, et d'une unité de conversion (U) intercalée, laquelle convertit les signaux radio en signaux d'appareil de terrain, ou les signaux d'appareil de terrain en signaux radio.

2. Dispositif constitué d'un modèle radio (FM) et d'un appareil de terrain (S1), l'appareil de terrain servant à l'acquisition et/ou à l'influence de variables-process et l'appareil de terrain (S1) ne présentant aucun équipement radio propre, l'appareil de terrain (S1) comportant une interface de bus de terrain et une connexion de service, l'appareil de terrain (S1) étant relié avec le module radio (FM) par l'intermédiaire de la connexion de service,
le module radio (FM) étant constitué d'une unité d'émission / de réception (S/E) pour les signaux radio, d'une unité de communication (KE), laquelle est reliée avec l'appareil de terrain (S1) par l'intermédiaire de la connexion de service, et d'une unité de conversion (U) intercalée, laquelle convertit les signaux radio en signaux d'appareil de terrain, ou les signaux d'appareil de terrain en signaux radio.

3. Dispositif selon la revendication 1,
**caractérisé en ce que** l'unité de communication KE peut être reliée par l'intermédiaire d'un câble de bus de terrain (FB) avec l'appareil de terrain (S1, S2, S3, A1, A2).

4. Dispositif selon l'une des revendications précédentes,
**caractérisé en ce que** la transmission de données sur le câble de bus de terrain (FB) fonctionne d'après la norme HART®.

5. Dispositif selon l'une des revendications précédentes,
**caractérisé en ce que** les signaux radio de l'unité d'émission / de réception (S/E) et les signaux du bus de terrain de l'unité de communication (KE) sont générés d'après le même protocole.

6. Dispositif selon l'une des revendications précédentes,
**caractérisé en ce que** l'alimentation en énergie du module radio (FM) est réalisée par l'intermédiaire du câble de bus de terrain (FB).

7. Dispositif selon l'une des revendications précédentes,
**caractérisé en ce que** le module radio (FM) et l'appareil de terrain (S1, S2, S3, A1, A2) sont reliés par l'intermédiaire d'une connexion par clip amovible.

8. Dispositif selon l'une des revendications précédentes,
**caractérisé en ce que** le module radio (FM) comporte plusieurs modules de communication (KE1, KE2) pour différents appareils de terrain (S1, S2).

9. Dispositif selon l'une des revendications précédentes, l'alimentation en énergie du module radio (FM) étant assurée par une batterie.
